# EUROPEAN PATENT SPECIFICATION

(11) **EP 1 395 761 B1**
(45) Date of publication and mention of the grant of the patent: **10.08.2005**
(21) Application number: 01949868.2
(22) Date of filing: 13.06.2001
(51) Int. Cl.: F16D 65/12, F16D 65/847

(54) **A DISK-BRAKE DISK WITH AIR COOLING**
SCHEIBE FÜR EINE LUFTGEKÜHLTE SCHEIBENBREMSE
DISQUE VENTILE POUR FREIN A DISQUE

(43) Date of publication of application: 10.03.2004
(73) Proprietor: Freni Brembo S.p.A., 24035 Curno, (Bergamo) (IT)
(72) Inventor: PACCHIANA, Giovanni, Paolo, I-24040 Locate (IT); PERRICONE, Guido, I-24126 Bergamo (IT)
(74) Representative: Siniscalco, Fabio
(86) International application number: PCT/IT2001/000302
(87) International publication number: WO 2002/101259

(56) References cited:
- EP-A- 1 081 404
- WO-A-00/09909
- DE-A- 19 505 014

## Description

The present invention relates to disk brakes and, more particularly, to a disk-brake disk with air cooling as known from WO-A-00/09909 and defined in the preamble of Claim 1.

A disk brake of the type used as a braking device in motor vehicles comprises an annular, cast-iron portion, commonly known as the braking band, which is usually integral with a hub, commonly known as the bell, and is connected to a wheel of the vehicle, and a caliper which is fixed to the hub-carrier, extends around the braking band and is provided with brake linings or pads. The caliper acts on the pads by means of an hydraulic actuation, so as to bring them into contact with the two opposed braking surfaces of the braking band. If the wheel with its bell and braking-band unit is rotating, the operation of the caliper brings about a braking effect due to the friction between the pads and the braking surfaces of the braking band, with consequent heating of the disk, that is, of the bell and the braking band as a whole. As is known, this heating leads to undesired deformation due to the difference in temperature between the band and the bell. To overcome this disadvantage, and to produce high-performance braking devices, disks in which the braking band and the bell are formed by two separate parts made of different materials and connected to one another by suitable coupling means have been proposed.

The materials which may be used for the manufacture of the braking band are composite materials, for example, carbon/silicon carbide (C/SiC) and those which may be used for the manufacture of the bell are metals such as steel, cast iron, aluminium alloys, titanium, etc. Although the materials used for the braking band have the required characteristics of resistance both to wear and to high temperatures and a low specific weight, they are quite fragile and their machining requires special tools and precautions. The connection between the braking band and the bell cannot therefore be made with the use of conventional coupling means such as pins, screws, etc. Moreover, the different coefficients of thermal expansion of the two materials requires that the restraint achieved by the couplings should not be too rigid.

In a disk of this type, as will be described in greater detail below, the bell has a plurality of radial teeth and the braking band has a corresponding plurality of radial recesses. The fitting of the teeth in the recesses achieves a coupling which ensures a tangential restraint between the two parts. The axial restraint between the two parts is ensured by plates which are fixed to the teeth of the bell by bolts and which extend around the portions of the braking band that are defined between adjacent radial recesses. To avoid too rigid a restraint and to ensure a uniform distribution of the load transmitted by a braking action, inserts in the form of suitably shaped plates are disposed between the teeth of the bell and the recesses of the braking band.

Disks which use braking bands made of the alternative materials indicated above reach very high temperatures during braking, particularly after repeated braking cycles as occurs, in practice, for example, during a descent. The disks are generally "solid" since they cannot be shaped to favour their ventilation as is done with disks made of conventional materials, for example, cast iron. Tests performed with C/SiC disks having through ventilation ducts have not led to satisfactory results because of the low coefficient of thermal conductivity of the material and of the limitations on the cross-section and on the extent of the ducts imposed by the geometrical characteristics required by the coupling with the bell.

The overheating problem relates not so much to the disk, since the material of which it is made can withstand even very high temperatures, but rather to other components of the brake, particularly the fluid of the braking system which risks reaching boiling point.

The aim of the invention is to propose a disk-brake disk of the type described above in which ventilation means which are effective and at the same time simple in structure and easy to fit are provided.

This aim is achieved by the provision of the disk which is defined and characterized in general in Claim 1 and specific embodiments of which are defined in the dependent claims.

The invention will be understood better from the following detailed description of some embodiments thereof given by way of non-limiting example with reference to the appended drawings, in which:
Figure 1 is an axonometric view of a disk-brake disk according to the invention, with parts separated,
Figure 2 is an axonometric view of the disk of Figure 1, after assembly,
Figures 3 to 9 are axonometric views of further embodiments of the disk according to the invention, and
Figure 9a shows an insert used in the disk of Figure 9, in perspective and on an enlarged scale.

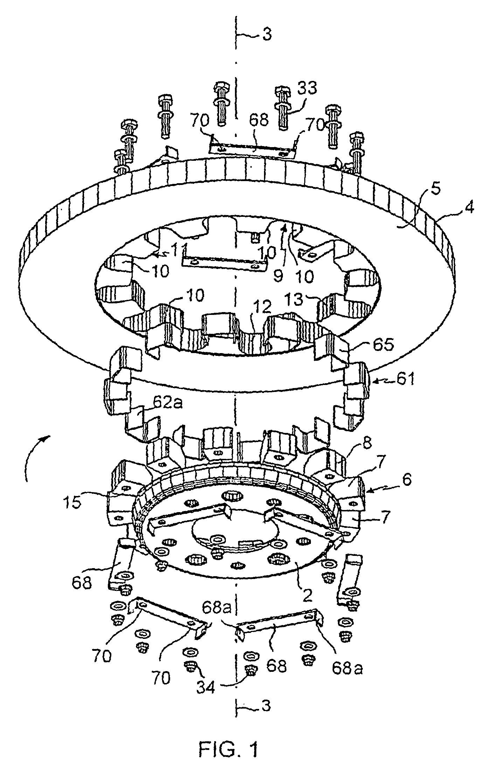

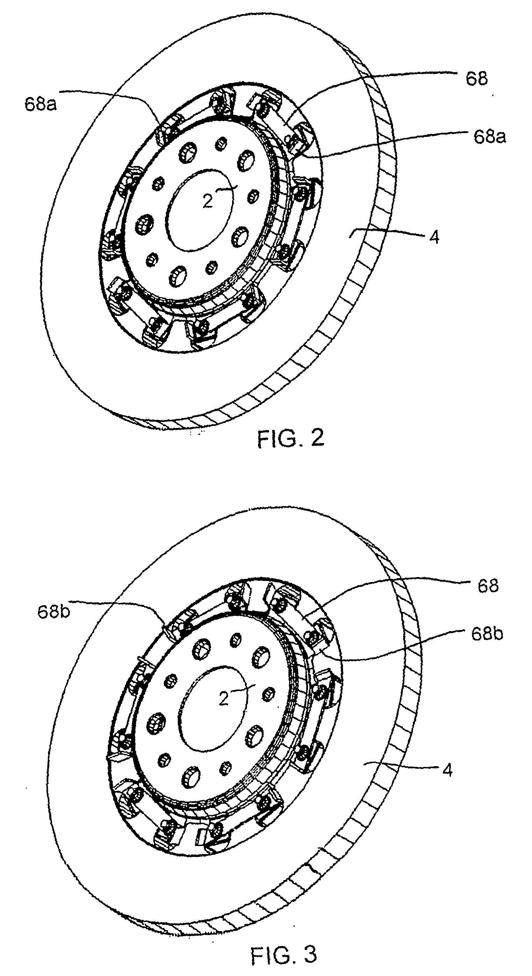

With reference to Figures 1 and 2, a disk according to the present invention comprises a bell 2 having an axis of rotation 3 and a braking band 4 having two opposed braking surfaces 5. The bell 2 may be made of hard anodized aluminium alloy or of sintered steel and the braking band 4 may be made of a composite material, for example, carbon/silicon carbide.

The bell 2 has an outer set of teeth constituted by a plurality of radial teeth 6, preferably spaced apart uniformly and having sides 7 which are connected by a head surface 8. Each radial tooth 6 has a through-hole 15 through which a screw 33 can extend. The braking band 4 has a plurality of corresponding radial recesses 9. The tangential restraint between the bell 2 and the braking band 4 is achieved by inserting the teeth 6 of the bell 2 in the recesses 9 of the braking band 4, after the interposition of generally U-shaped inserts 61 constituted by plates of yielding material, for example, drawing steel. Each of the inserts 61 has a profile substantially complementary to that of a tooth 6 of the bell 2, with a base 65 and two substantially identical arms 62a, and can be fitted in a corresponding recess 9 of the braking band 4 so that the arms 62a interfere with the opposed sides 10 of the recess.

The disk also has a plurality of elongate plates 68 arranged in circular series on its two opposed sides. Each plate 68 has two holes 70 spaced apart in a manner such that each is aligned with respective holes 15 of two adjacent teeth 6 and can extend around a portion of the braking band 4 defined by two adjacent radial recesses (Figure 2). The plates 68 of one side alternate with the plates 68 of the opposite side so as to ensure an axial restraint between the bell 2 and the braking band 4 when the screws 33 are screwed into respective nuts 34. Each plate 68 has its ends bent at right angles along lines perpendicular to its longer sides to form two fins 68a.

In order to assemble the disk, the U-shaped inserts 61 are inserted in the corresponding recesses 9 in a manner such that the outer surfaces of the arms 62a interfere with the sides 10 of the recesses 9. The radial teeth 6 of the bell 2 are then inserted in the recesses between the arms of the inserts, forming the tangential coupling between the bell 2 and the braking band 4. Finally, the plates 68 are arranged in circular series with their fins 68a facing outwardly, the screws are inserted in the holes 70 in the plates and in the holes 15 in the teeth of the bell, and the nuts are screwed onto the screws.

The structure shown in Figure 2 is thus obtained, that is, a disk in which the bent ends 68a of the axial restraint plates 68 project from the planes of the two braking surfaces of the braking band 4, forming two rings of ventilation fins (only one of which is visible in Figure 2) along the inner edge of the band.

In this embodiment, the fins 68a project perpendicularly from the braking surface, but they could also be bent at angles other than right angles if that were advantageous for improving the ventilation effect of the disk during its rotation.

Moreover, the orientation of the fins which, in the embodiment of Figure 1, is that which results from the bending of the ends of the plate along lines perpendicular to the longer sides of the plate, could be different, for example, radial, as shown in Figure 3, in which the fins are indicated 68b.

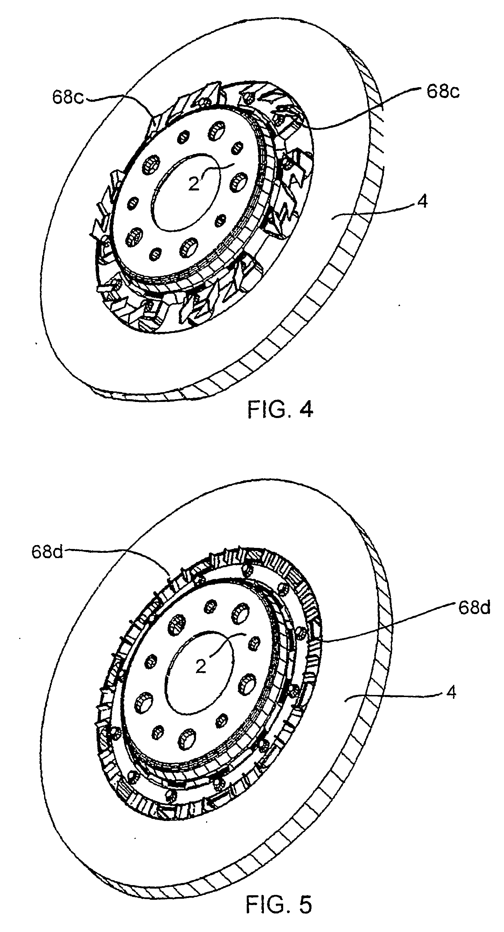

According to another embodiment of the invention shown in Figure 4, the axial restraint plates are substantially quadrangular and, more precisely, are formed as sectors of circular rings in which the side facing the bell 2 performs the restraint function and the side facing the band 4 has fins 68c produced by cutting and bending. The bending line is such that the fins 68c are oriented at a uniform angle to the radii of the disk.

According to yet another embodiment, shown in Figure 5, the axial restraint elements comprise annular plates, of which there is one on each face of the disk, and in which radial fins 68d are formed by cutting and bending in the side facing the band.

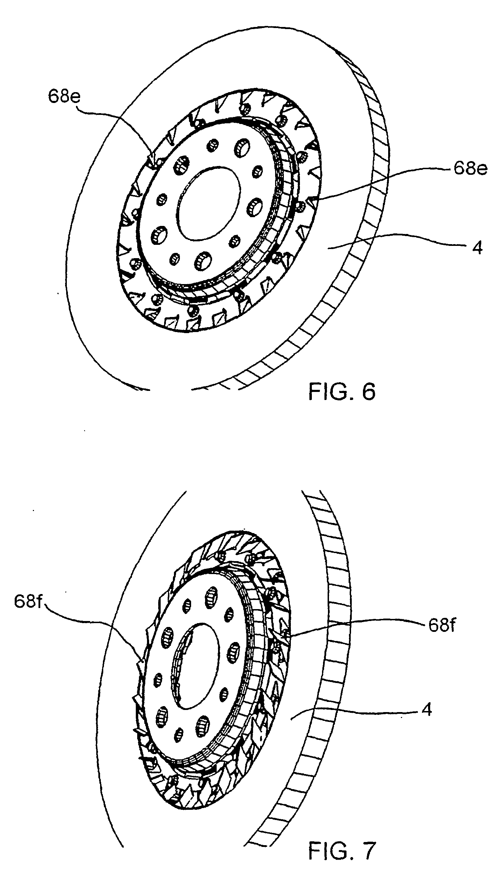

Figures 6 and 7 show another two embodiments of annular restraint plates, one with triangular fins 68e formed by radial cutting and bending at uniform angles to the radii and the other with rectangular fins 68f formed by a circular ring outside the circular ring of the annular restraint plate, with L-shaped cutting and bending along a line inclined to the radius.

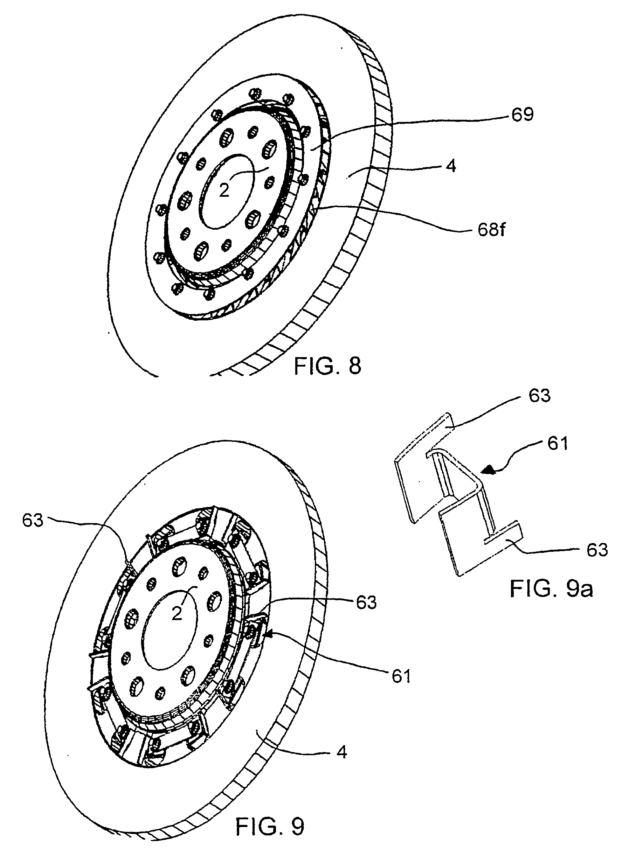

Figure 8 shows an embodiment in which the fins are formed as in the embodiment of Figure 7 but in which an annular plate 69 closes the tops of the spaces defined by the fins 68f so as to form a plurality of true ventilation ducts. The annular cover plate 69 is fixed by the same screws which serve to fix the annular restraint plates. Suitable spacers, for example, bushes (not visible in the drawings), which surround the screws, are provided between the annular restraint plate and the annular cover plate.

Figure 9 shows an embodiment of the invention in which the inserts for adaptation between the teeth 6 of the bell 2 and recesses 9 of the band 4, again indicated 61, are shaped in a manner such that each has two fins 63 projecting from the planes of the braking surfaces of the disk. The inserts 61 of Figure 9 differ from the U-shaped inserts 61 of Figure 1 in that the arms of the U-shaped plates are extended laterally as shown in Figure 9a, each forming a fin 63 on one face of the disk and another fin on the opposite face.

As is clear from the foregoing description, the disk according to the invention can be produced practically without modification of the basic structure of a disk of the type constituted by a bell and a braking band in two separate parts, but simply by applying small modifications to the coupling elements between the two parts. However, these small modifications achieve significant advantages in terms of efficiency. In fact, comparative tests between a disk with a steel bell and a carbon/silicon carbide braking band without ventilation fins and an identical disk but modified in accordance with the invention showed that the operating temperatures were significantly lower in the disk according to the invention, for given operating conditions.

Although only some specific embodiments of the invention have been described and illustrated, clearly many variations and modifications are possible within the scope of the same inventive concept. For example, the ventilation fins could be provided on only one face of the disk rather on both faces, or some of the ventilation fins could be formed by restraint plates similar to those of Figures 2, 3 or 4 and some by adaptation inserts such as those of the embodiment of Figure 9.

## Claims

1. A disk-brake disk with air cooling, comprising a bell (2), an annular braking band (4), coupling means (6, 9, 61, 68, 33, 34) between the bell and the braking band, and ventilation means, the coupling means comprising axial restraint means (68, 33, 34) and the ventilation means comprising a plurality of fins (68a, 63) which project from the plane of at least one of the braking surfaces of the annular braking band (4) in the vicinity of the inner edge of the band, **characterized in that** at least some (68a) of the fins (68a, 63) are formed integrally with elements (68) of the axial restraint means, the elements of the axial restraint means comprising at least one plate, (68), and the fins integral with the elements being formed by bent portions (68a-68f) of the plate or plates.

2. A disk according to Claim 1, in which the plates are elongate and the bent portions of the plates which form the fins are end portions (68a, 68b) of the elongate plates.

3. A disk according to Claim 1 in which the plates are substantially quadrangular.

4. A disk according to any one of Claims 1 to 3, in which the coupling means comprise tangential restraint means (6, 9, 61) with adaptation inserts (61), and in which at least some (63) of the fins (68a, 63) are formed integrally with the adaptation inserts (61).

5. A disk according to Claim 1, in which the elements of the axial restraint means comprise at least one annular plate.

6. A disk according to Claim 5, comprising an annular cover plate which is associated with the or with each annular plate having the fins and is arranged parallel thereto so as to close the tops of the spaces defined by the fins (68f).

7. A disk according to any one of the preceding claims in which the fins are substantially perpendicular to the plane of the braking surface.

8. A disk according to any one of the preceding claims in which the fins are oriented radially.

9. A disk according to any one of the preceding claims 1 to 7 in which the fins are oriented at a predetermined angle to the radial direction.

## Patentansprüche

1. Eine Scheibenbremsenscheibe mit Luftkühlung, die eine Muffe (2), ein ringförmiges Bremsband (4), eine Kopplungseinrichtung (6, 9, 61, 68, 33, 34) zwischen der Muffe und dem Bremsband, und eine Lüftungseinrichtung umfasst, wobei die Kopplungseinrichtung eine axiale Beschränkungseinrichtung (68, 33, 34) umfasst und die Lüftungseinrichtung eine Mehrzahl von Rippen (68a, 63) umfasst, die von der Ebene von zumindest einer der Bremsoberflächen des ringförmigen Bremsbands (4) in der Nähe des inneren Rands des Bands vorstehen, **dadurch gekennzeichnet, dass** zumindest einige (68a) der Rippen (68a, 63) einstückig mit Elementen (68) der axialen Beschränkungseinrichtung gebildet sind, wobei die Elemente der axialen Beschränkungseinrichtung zumindest eine Platte (68) umfassen, und die Rippen, die einstückig mit den Elementen sind, durch gebogene Abschnitte (68a - 68f) der Platte oder Platten gebildet sind.

2. Eine Scheibe gemäß Anspruch 1, bei der die Platten länglich sind und die gebogenen Abschnitte der Platten, die die Rippen bilden, Endabschnitte (68a, 68b) der länglichen Platten sind.

3. Eine Scheibe gemäß Anspruch 1, bei der die Platten im Wesentlichen viereckig sind.

4. Eine Scheibe gemäß einem der Ansprüche 1 bis 3, bei der die Kopplungseinrichtung eine Tangentialbeschränkungseinrichtung (6, 9, 61) mit Anpassungseinsätzen (61) umfasst, und bei der zumindest einige (63) der Rippen (68a, 63) einstückig mit den Anpassungseinsätzen (61) gebildet sind.

5. Eine Scheibe gemäß Anspruch 1, bei der die Elemente der axialen Beschränkungseinrichtung zumindest eine ringförmige Platte umfassen.

6. Eine Scheibe gemäß Anspruch 5, die eine ringförmige Abdeckungsplatte umfasst, die der oder jeder der ringförmigen Platten, mit den Rippen zugeordnet ist, und parallel dazu angeordnet ist, um die Oberseiten der Abstände zu schließen, die durch die Rippen (68f) definiert sind.

7. Eine Scheibe gemäß einem der vorhergehenden Ansprüche, bei der die Rippen im Wesentlichen senkrecht zu der Ebene der Bremsoberfläche sind.

8. Eine Scheibe gemäß einem der vorhergehenden Ansprüche, bei der die Rippen radial ausgerichtet sind.

9. Eine Scheibe gemäß einem der Ansprüche 1 bis 7, bei der die Rippen in einem vorbestimmten Winkel zu der Radialrichtung ausgerichtet sind.

## Revendications

1. Disque ventilé pour frein à disque, comprenant une sonnerie (2), une bande de freinage annulaire (4), des moyens de couplage (6, 9, 61, 68, 33, 34) entre la sonnerie et la bande de freinage, et des moyens de ventilation, les moyens de couplage comprenant des moyens de retenue axiale (68, 33, 34) et les moyens de ventilation comprenant une pluralité de nervures (68a, 63) qui font saillie depuis le plan d'au moins une des surfaces de freinage de la bande de freinage annulaire (4) à proximité du bord interne de la bande, **caractérisé en ce qu'**au moins certaines (68a) des nervures (68a, 63) sont formées de manière solidaire avec des éléments (68) des moyens de retenue axiale, les éléments des moyens de retenue axiale comprenant au moins une plaque (68), et les nervures solidaires avec les éléments étant formées par des parties courbées (68a-68f) de la plaque ou des plaques.

2. Disque selon la revendication 1, dans lequel les plaques sont allongées et les parties courbées des plaques qui forment les nervures sont des parties d'extrémité (68a, 68b) des plaques allongées.

3. Disque selon la revendication 1, dans lequel les plaques sont sensiblement quadrangulaires.

4. Disque selon l'une quelconque des revendications 1 à 3, dans lequel les moyens de couplage comprennent des moyens de retenue tangentielle (6, 9, 61) dotés d'inserts d'adaptation (61), et dans lequel au moins certaines (63) des nervures (68a, 63) sont formées de manière solidaire avec les inserts d'adaptation (61).

5. Disque selon la revendication 1, dans lequel les éléments des moyens de retenue axiale comprennent au moins une plaque annulaire.

6. Disque selon la revendication 5, comprenant une plaque de couverture annulaire qui est associée avec la ou avec chaque plaque annulaire ayant les nervures et qui est agencée parallèlement à celle-ci, de manière à fermer les extrémités des parties supérieures définies par les nervures (68f).

7. Disque selon l'une quelconque des revendications précédentes, dans lequel les nervures sont sensiblement perpendiculaires au plan de la surface de freinage.

8. Disque selon l'une quelconque des revendications précédentes, dans lequel les nervures sont orientées de manière radiale.

9. Disque selon l'une quelconque des revendications 1 à 7 précédentes, dans lequel les nervures sont orientées selon un angle prédéterminé par rapport à la direction radiale.
